(19) Europäisches Patentamt
European Patent Office
Office européen des brevets

(11) **EP 2 845 303 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(21) Anmeldenummer: **13729671.1**

(22) Anmeldetag: **11.06.2013**

(51) Int Cl.:
*H02M 7/797* (2006.01)        *H02M 7/483* (2007.01)

(86) Internationale Anmeldenummer:
**PCT/EP2013/062003**

(87) Internationale Veröffentlichungsnummer:
**WO 2014/001079 (03.01.2014 Gazette 2014/01)**

(54) **STROMRICHTER UND BETRIEBSVERFAHREN ZUM WANDELN VON SPANNUNGEN**

POWER CONVERTER AND OPERATING METHOD FOR CONVERTING VOLTAGES

CONVERTISSEUR ET PROCÉDÉS DE CONVERSION DE TENSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.06.2012 DE 102012211122**

(43) Veröffentlichungstag der Anmeldung:
**11.03.2015 Patentblatt 2015/11**

(73) Patentinhaber: **Siemens Aktiengesellschaft 80333 München (DE)**

(72) Erfinder: **BAKRAN, Mark-Matthias 91052 Erlangen (DE)**

(56) Entgegenhaltungen:
**WO-A1-2011/141059**

EP 2 845 303 B1

**Beschreibung**

Die Erfindung betrifft einen Stromrichter, der einen n-phasigen Transformator und eine Stromrichterschaltung mit n MMC-Modulen umfasst, wobei die Anzahl n mindestens drei beträgt. Jedes MMC-Modul umfasst mindestens zwei in Reihe geschaltete Submodule. Jedes Submodul umfasst eine Submodul-Halbbrücke und eine Submodulkapazität, die der Submodul-Halbbrücke parallelgeschaltet ist. Jeder Submodulzweig jeder Submodul-Halbbrücke umfasst je einen Halbleiterschalter. Die MMC-Module sind in Reihe geschaltet und zwischen direkt miteinander elektrisch verbundenen MMC-Modulen ist jeweils ein elektrischer Abgriff (18) vorgesehen. Der Stromrichter kann auch als 'modularer Mehrpunktstromrichter' oder als MMC (*modular multilevel converter*) bezeichnet werden.

Des Weiteren betrifft die Erfindung ein Betriebsverfahren zum Wandeln einer Gleichspannung in eine mindestens dreiphasige Wechselspannung und ein Betriebsverfahren zum Wandeln einer mindestens dreiphasigen Wechselspannung in eine Gleichspannung.

Die WO2011/141059A1 beschreibt einen Zweig für eine Phase, der eine Kaskade von Halbbrücken-Konverter-Zellen umfasst, entsprechend dem Oberbegriff des Anspruchs 1.

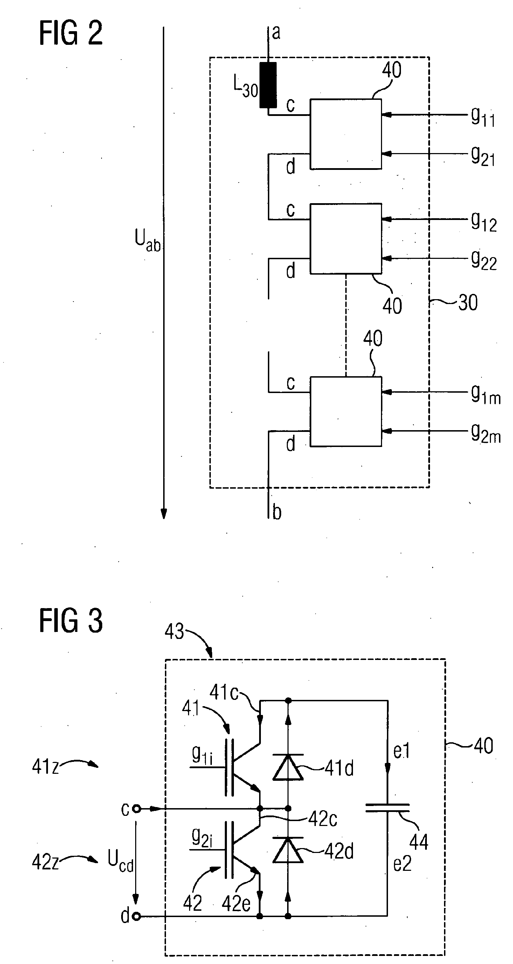

Aus Rohner, S., "Untersuchung des Modularen Mehrpunktstromrichters M2C für Mittelspannungsanwendungen", Diss., TU Dresden, 2010, S. 14, Abb. 2.2 ist eine Stromrichterschaltung bekannt. Die bekannte Stromrichterschaltung ist komplex und aufwändig in der Herstellung. Denn dafür sind mindestens sechs MMC-Module zu realisieren, wobei jedes MMC-Modul eine ausreichende Anzahl von Submodulen umfassen muss, um eine ausreichende Spannungsfestigkeit sicherzustellen. Außerdem wird je MMC-Modul eine Induktivität benötigt, um MMC-interne Wechselströme zwischen MMC-Modulen zu unterdrücken. Bei einem elektrischen Versorgungsnetz auf Gleichstrombasis oder auch bei einer Gleichstrom-Punkt-zu-Punkt-Verbindung mit Spannungen über einem oder mehreren 100 kV besteht öfters die Aufgabe, an einer Zwischenstelle eine kleine Leistung auszukoppeln (beispielsweise zu einem Zwischenverbraucher oder zu einer Betriebseinrichtung der Gleichstromverbindung). Alternativ oder zusätzlich kann auch die Aufgabe bestehen, an einer Zwischenstelle eine kleine Leistung einzukoppeln (beispielsweise von einer Energiequelle und/oder von einer Energieübernahmestelle eines anderen Versorgungsnetzes, die an dem Übertragungsweg liegt). Als 'kleine Leistung' wird hier eine Leistung bezeichnet, die deutlich kleiner ist als eine Gesamtübertragungsleistung der Gleichstromübertragung.

Es ist eine Aufgabe der Erfindung, Streufelder und Ohmsche Verluste in dem aus WO 2011/141059 bekannten Stromrichter zu verringern.

Erfindungsgemäß wird diese Aufgabe dadurch gelöst, dass ein Stromrichter bereitgestellt wird, der einen n-phasigen Transformator und eine Stromrichterschaltung mit n MMC-Modulen umfasst, wobei die Anzahl n mindestens drei beträgt. Jedes MMC-Modul umfasst mindestens zwei in Reihe geschaltete Submodule. Jedes Submodul umfasst eine Submodul-Halbbrücke und eine Submodulkapazität, die der Submodul-Halbbrücke parallelgeschaltet ist. Jeder Submodulzweig jeder Submodul-Halbbrücke umfasst je einen Halbleiterschalter, wobei die MMC-Module in Reihe geschaltet sind und jeweils ein elektrischer Abgriff zwischen direkt miteinander elektrisch verbundenen MMC-Modulen vorgesehen ist. Der Stromrichter umfasst Auskoppelkondensatoren zum Zuführen von elektrischer Energie zu dem Transformator und/oder zum Entnehmen von elektrischer Energie aus dem Transformator. Je eine Wicklung einer ersten Seite des Transformators bildet mit je einem der Auskoppelkondensatoren eine Serienschaltung, wobei jede der Serienschaltungen zu je einem der MMC-Module parallelgeschaltet ist. Zu zwei Serienschaltungen, die mit einem selben Abgriff elektrisch verbunden sind, ist nur eine gemeinsame elektrische Zuleitung zu dem Abgriff vorgesehen.

In Bezug auf das Betriebsverfahren zum Wandeln einer Gleichspannung in eine mindestens dreiphasige Wechselspannung wird die Aufgabe dadurch gelöst, dass das Betriebsverfahren folgende Schritte umfasst:

- Anlegen der Gleichspannung an eine Reihenschaltung von MMC-Modulen, wobei jedes der MMC-Module mindestens zwei in Reihe geschaltete Submodule umfasst, wobei jedes Submodul eine Submodul-Halbbrücke und eine Submodulkapazität umfasst, die der Submodul-Halbbrücke parallelgeschaltet ist, wobei jeder Submodulzweig jeder Submodul-Halbbrücke je einen Halbleiterschalter umfasst;
- phasenversetztes Ansteuern der MMC-Module zum Erzeugen und Bereitstellen mehrerer phasenversetzter Spannungen an Anschlüssen der MMC-Module; und
- Anlegen der phasenversetzten Spannungen an Wicklungen einer ersten Seite eines mehrphasigen Transformators mittels Auskoppelkondensatoren.

Je eine Wicklung einer ersten Seite des Transformators bildet mit je einem der Auskoppelkondensatoren eine Serienschaltung, wobei jede der Serienschaltungen zu je einem der MMC-Module parallelgeschaltet ist. Zu zwei Serienschaltungen, die mit einem selben Abgriff elektrisch verbunden sind, ist nur eine gemeinsame elektrische Zuleitung zu dem Abgriff vorgesehen.

In Bezug auf das Betriebsverfahren zum Wandeln einer mindestens dreiphasigen Wechselspannung in eine Gleichspannung wird die Aufgabe dadurch gelöst, dass das Betriebsverfahren folgende Schritte umfasst:

- Anlegen der mindestens dreiphasigen Wechselspannung an eine zweite Seite eines Transformators;
- Auskoppeln mindestens dreiphasiger Spannungen an Wicklungen einer ersten Seite des mehrphasigen Transformators mittels Auskoppelkondensatoren;
- phasenversetztes Ansteuern von in Reihe geschalteten MMC-Modulen zum Erzeugen und Bereitstellen mehrerer phasenversetzter Spannungen an Anschlüssen der MMC-Module, wobei jedes der MMC-Module mindestens zwei in Reihe geschaltete Submodule umfasst, wobei jedes Submodul eine Submodul-Halbbrücke und eine Submodulkapazität umfasst, die der Submodul-Halbbrücke parallelgeschaltet ist, wobei jeder Submodulzweig jeder Submodul-Halbbrücke je einen Halbleiterschalter umfasst.

Je eine Wicklung einer ersten Seite des Transformators bildet mit je einem der Auskoppelkondensatoren eine Serienschaltung, wobei jede der Serienschaltungen zu je einem der MMC-Module parallelgeschaltet ist. Zu zwei Serienschaltungen, die mit einem selben Abgriff elektrisch verbunden sind, ist nur eine gemeinsame elektrische Zuleitung zu dem Abgriff vorgesehen.

Die hier und im Folgenden beschriebenen Betriebsverfahren sind (ohne Beschränkung der Allgemeinheit) mit der erfindungsgemäßen Stromrichterschaltung und mit einem beliebigen erfindungsgemäßen Stromrichter anwendbar.

Bei symmetrischem Betrieb der MMC-Module wird jedes MMC-Modul so gesteuert, dass ein arithmetischer Mittelwert (d.h. Gleichspannungsanteil) eines Spannungsabfalls an dem MMC-Modul einem n-tel der Gleichspannung zwischen den Gleichspannungsleitungen beträgt. Außerdem beträgt bei symmetrischem Betrieb der MMC-Module die Summe der Wechselspannungsanteile der von den MMC-Modulen bereitgestellten Teilspannungen zu jedem Zeitpunkt null Volt. Daraus folgt, dass bei symmetrischem Betrieb der erfindungsgemäßen Stromrichterschaltung durch die MMC-Module auf den Gleichspannungsleitungen keine Wechselströme verursacht werden. Da keine Parallelschaltung von MMC-Zweigen existiert, kann auf die bei bekannten Stromrichterschaltungen üblichen Induktivitäten zur Wechselstromabblockung (der Kreisströme) zwischen MMC-Modulen verzichtet werden. Zweckmäßig ist, wenn eine doppelte Amplitude der von den einzelnen MMC-Modulen bereitgestellten Wechselspannungsanteile nicht größer ist als ein n-tel der Gleichspannung zwischen den Gleichspannungsleitungen.

Von Vorteil ist, dass zu zwei Serienschaltungen, die mit einem selben Abgriff elektrisch verbunden sind, nur eine gemeinsame elektrische Verbindung zu dem Abgriff vorgesehen ist. Hierdurch können sich Ströme schaltungstechnisch benachbarter Serienschaltungen auf ihrer gemeinsamen Zuleitung zeitweise zumindest teilweise kompensieren. Hierdurch werden Streufelder und ohmsche Verluste verringert. Für die gemeinsamen Zuleitungen kann ein kleinerer Gesamtquerschnitt gewählt werden.

Bevorzugt ist, wenn der Stromrichter eine MMC-Steuerung zur Steuerung der Halbleiterschalter umfasst, um mittels der Stromrichterschaltung für die Serienschaltungen mehrere zueinander phasenversetzte Spannungen bereitzustellen. Hierdurch kann eine Kompatibilität der Steuerung zu den MMC-Modulen und ein Anschluss der MMC-Module an die Steuerung herstellerseitig ausgetestet werden und eine Gefahr von Funktionsmängeln verringert werden.

Auch kann von Vorteil sein, wenn ein Quotient aus einem Effektivwert eines Spannungsabfalls an einer der Serienschaltungen und eines Effektivwerts eines Spannungsabfalls an dem Auskoppelkondensator der Serienschaltung größer als 6 oder 10, ganz besonders bevorzugt größer als 20, ist. Hierdurch wird eine Auswirkung der Kapazität auf das Steuerverhalten minimiert.

In Bezug auf die Betriebsverfahren ist es bevorzugt, wenn eine Summe der Spannungsabfälle an den MMC-Modulen konstant ist. Hierdurch werden Wechselspannungsanteile und eine Entstehung eines Wechselanteils eines elektrischen Felds zwischen Anschlussleitungen der Gleichspannungsseite vermieden.

In Bezug auf die Betriebsverfahren ist es bevorzugt, wenn ein Strom durch die Reihenschaltung der MMC-Module konstant ist. Hierdurch werden Wechselstromanteile und eine Entstehung eines Wechselanteils eines Magnetfelds an den Anschlussleitungen der Gleichspannungsseite vermieden oder zumindest verringert.

In Bezug auf die Betriebsverfahren kann auch zweckmäßig sein, wenn eine Summe der Spannungsabfälle an den MMC-Modulen lastunabhängig ist. Hierdurch kann eine Wechsel- beziehungsweise Gleichspannungsquelle bereitgestellt werden, die einen niedrigen Innenwiderstand aus Sicht des jeweils angeschlossenen Verbrauchers aufweist.

Die Erfindung ist anhand der beigefügten Zeichnungen näher erläutert, in denen zeigen:

FIG 1     schematisch eine erste Ausführungsform eines Stromrichters, der eine Stromrichterschaltung und einen Drehstromtransformator umfasst;

FIG 2     schematisch eine mögliche Grundschaltung eines MMC-Moduls;

FIG 3     schematisch eine mögliche Grundschaltung eines MMC-Submoduls;

FIG 4     schematisch (für die erste und die zweite Ausführungsform) Spannungsverläufe der MMC-Module und der Summenspannung während eines Betriebs des Stromrichters,

FIG 5    schematisch eine erfindungsgemäße Ausführungsform eines Stromrichters, der eine Stromrichterschaltung und einen Drehstromtransformator umfasst;

FIG 6    schematisch ein Ablaufdiagramm für eine Ausführungsform eines erfindungsgemäßen Betriebsverfahrens zum Wandeln einer Gleichspannung in eine mindestens dreiphasige Wechselspannung;

FIG 7    schematisch ein Ablaufdiagramm für eine Ausführungsform eines erfindungsgemäßen Betriebsverfahrens zum Wandeln einer mindestens dreiphasigen Wechselspannung in eine Gleichspannung.

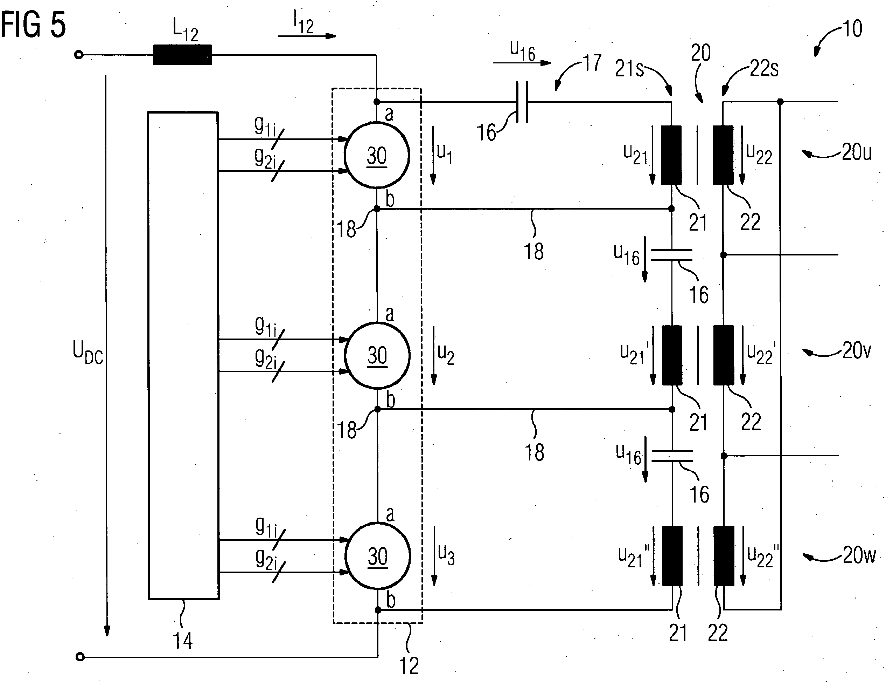

In den nachfolgend näher geschilderten Ausführungsbeispielen stell't die Ausführungsförm nach Figur 5 die vorliegende Erfindung dar.

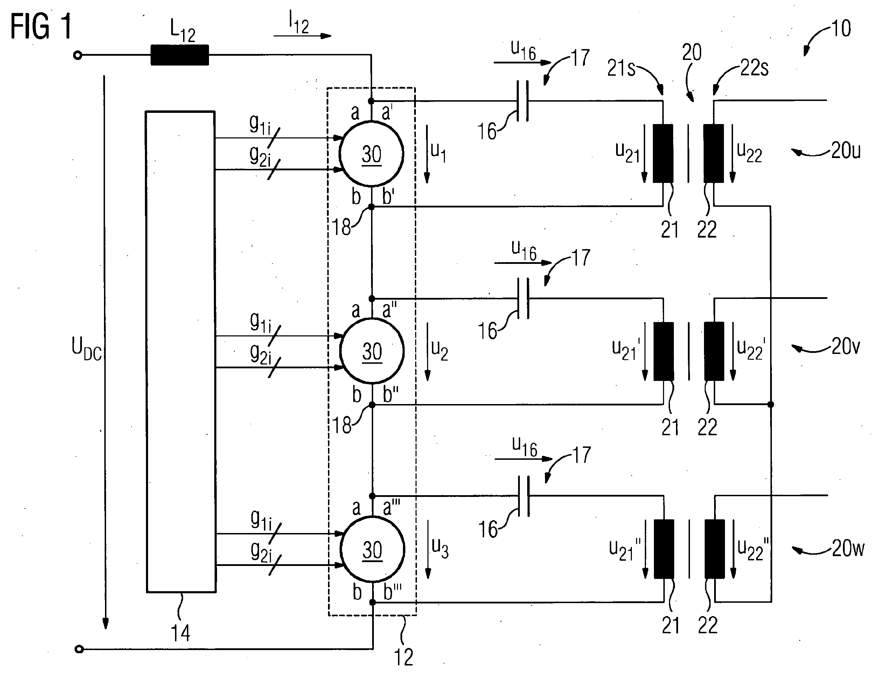

Stromrichter auf der Basis von MMC-Modulen (MMC = *modular multilevel converter*) eignen sich zum Umwandeln einer Gleichspannung $U_{DC}$ in eine mehrphasige Wechselspannung $U_{22}$, $U_{22}'$, $U_{22}''$ und zum Umwandeln einer mehrphasigen Wechselspannung $U_{22}$, $U_{22}'$, $U_{22}''$ in eine Gleichspannung $U_{DC}$. Die FIG 1 zeigt eine erste Ausführungsform eines Stromrichters 10. Der Stromrichter 10 umfasst eine Stromrichterschaltung 12, eine MMC-Steuerung 14, Auskoppelkondensatoren 16, sowie drei Einzeltransformatoren 20u, 20v, 20w oder einen Drehstromtransformator 20. Bei einem Stromrichter 10 mit einem Vielfachen von drei Phasen (beispielsweise einem zwölfphasigen System) kann ein entsprechendes Vielfaches von Drehstromtransformatoren verwendet werden. Die Stromrichterschaltung 12 umfasst drei in Reihe geschaltete MMC-Module 30.

Stromrichter 10 können gleichspannungsseitig Rücken-an-Rücken-gestellt konfiguriert und betrieben werden, um sie beispielsweise als Spannungsumrichter und/oder für eine oder mehrere der folgenden Funktionen zu verwenden: Frequenzumrichter, Phasenzahländerer, Blindleistungskompensator, Innenwiderstandsänderer, Lastschalter, Potentialtrennung.

Stromrichter 10 können wechselspannungsseitig Rücken-an-Rücken-gestellt konfiguriert und betrieben werden, um sie beispielsweise als Gleichspannungswandler (DC-DC-Wandler) und/oder für eine oder mehrere der folgenden Funktionen zu verwenden: Innenwiderstandsänderer, Lastschalter, Potentialtrennung.

Jedes MMC-Modul 30 (jeweils mit den Anschlüssen a und b) umfasst eine Reihenschaltung aus m MMC-Submodulen 40 (jeweils mit den Anschlüssen c und d), deren Grundschaltung in der Beschreibung zu FIG 3 erläutert ist. Die Anzahl m der MMC-Submodule 40 beträgt mindestens 2 und ist in der Regel um ein Mehrfaches größer als 2.

Die MMC-Steuerung 14 erzeugt Steuersignale $g_{1i}$, $g_{2i}$ zur Ansteuerung der (in den MMC-Modulen 30 enthaltenen) MMC-Submodule 40. In der Zeichnung soll der Index i zu den Steuersignalen $g_{1i}$, $g_{2i}$ daran erinnern, dass die Steuerung 14 dazu vorgesehen ist, für jedes MMC-Submodul 40 ein eigenes Paar von Steuersignalen $g_{1i}$, $g_{2i}$ zu erzeugen, also insgesamt m Paare von Steuersignalen $g_{1i}$, $g_{2i}$. Die Steuerung 14 beeinflusst mittels der Steuersignale $g_{1i}$, $g_{2i}$ ein Verhältnis der Teilspannungen $u_1$, $u_2$, $u_3$ an den in Reihe geschalteten MMC-Modulen 30.

Jedem MMC-Modul 30 ist eine eigene Serienschaltung 17 parallelgeschaltet, die jeweils einen der Auskoppelkondensatoren 16 und jeweils eine der Primärwicklungen 21 der Transformatoren 20u, 20v, 20w umfasst.

Die in den FIG 1 und 5 gezeigten Ausführungsformen sowie deren Varianten lassen sich auch in umgekehrter Leistungsübertragungsrichtung, also zum Gleichrichten und/oder zum Einspeisen einer elektrischen Leistung in ein Gleichspannungssystem nutzen. Aus Übersichtlichkeitsgründen wird in der folgenden Figurenbeschreibung die Bezeichnung 'Primärwicklung' auch für den Fall verwendet, dass der Stromrichter 10 zum Gleichrichten (d.h. zum Erzeugen von Gleichstrom aus Drehstrom) statt zum Wechselrichten (d.h. zum Erzeugen von Drehstrom aus Gleichstrom) verwendet wird. Entsprechendes gilt für die Bezeichnung 'Sekundärwicklung'.

In dem Ausführungsbeispiel der FIG 1 werden die Sekundärwicklungen 22 der Transformatoren 20u, 20v, 20w beziehungsweise des Drehstromtransformators 20 in Sternschaltung betrieben. Alternativ können die Sekundärwicklungen 22 in Dreiecksschaltung betrieben werden.

Das in FIG 2 gezeigte MMC-Modul 30 umfasst eine Reihenschaltung aus m MMC-Submodulen 30, deren Aufbau und Funktionsweise im Folgenden anhand von FIG 3 näher erläutert ist. Die Anzahl m beträgt mindestens 2 und ist in der Regel um ein Mehrfaches größer als 2. Jedes MMC-Submodul 30 hat ein Paar von Steueranschlüssen $g_{1i}$, $g_{2i}$, mit denen dessen Schaltzustand von einer MMC-Steuerung 14 beeinflussbar ist. Um Wechselstromanteile oberhalb der Netzfrequenz zu dämpfen, kann in jedem MMC-Modul 30 eine Induktivität $L_{30}$ und/oder zu der Stromrichterschaltung 12 eine Induktivität $L_{12}$ (siehe FIG 1) in Reihe geschaltet sein.

Das in FIG 3 gezeigte MMC-Submodul 40 umfasst eine Reihenschaltung 43 von zwei IGBT (*Insulated Gate Bipolar Transis*tor). Hierbei ist ein Emitteranschluss 41e eines ersten IGBT 41 mit einem Kollektoranschluss 42c eines zweiten IGBT 42 elektrisch verbunden. Die Reihenschaltung 43 der zwei IGBT 41, 42 wird von einer Submodulkapazität 44 überbrückt. Hierzu ist ein erster Anschluss e1 der Submodulkapazität 44 mit dem Kollektor 41c des ersten IGBT 41 elektrisch verbunden und ein zweiter Anschluss e2 der Submodulkapazität 44 mit dem Emitter 42e des zweiten IGBT 42 elektrisch verbunden. Zwischen Emitter 41e und Kollektor 41c des ersten IGBT 41 ist eine Freilaufdiode 41d angeordnet. Zwischen Emitter 42e und Kollektor 42c des zweiten IGBT 42 ist ebenfalls eine Freilaufdiode 42d angeordnet.

Wenn der zweite IGBT 42 nichtleitend geschaltet ist und an den Anschlüssen c, d des MMC-Submoduls 40 eine größere Spannung $U_{cd}$ als an der Submodulkapazität 44 anliegt, wird die Submodulkapazität 44 über die erste Freilaufdiode 41d aufgeladen. Wenn der erste IGBT 41 leitend geschaltet ist, während der zweite IGBT 42 nichtleitend geschaltet ist, und an den Anschlüssen c, d des MMC-Submoduls 40 eine kleinere Spannung $U_{cd}$ als an der Submodulkapazität 44 anliegt, kann sich die Submodulkapazität 44 über den ersten IGBT 41 entladen, also eine elektrische Energie an die Anschlüsse c, d des MMC-Submoduls 40 abgeben. Wenn der erste IGBT 41 nichtleitend geschaltet ist, während der zweite IGBT 42 leitend geschaltet ist, sind die Anschlüsse c, d des MMC-Submoduls 40 kurzgeschlossen und die Submodulkapazität 44 bewahrt ihren Ladungszustand. Mittels bekannter Ansteuerung mehrerer MMC-Submodule 40, die in Reihe geschaltet sind, kann für jedes MMC-Modul 30 nahezu jeder Spannungsverlauf eingestellt werden. Es lässt sich also ein Betriebsverhalten der MMC-Module identisch zu einer steuerbaren Spannungsquelle erreichen, welche im Mittelwert jedoch weder Leistung ab- noch aufnehmen kann.

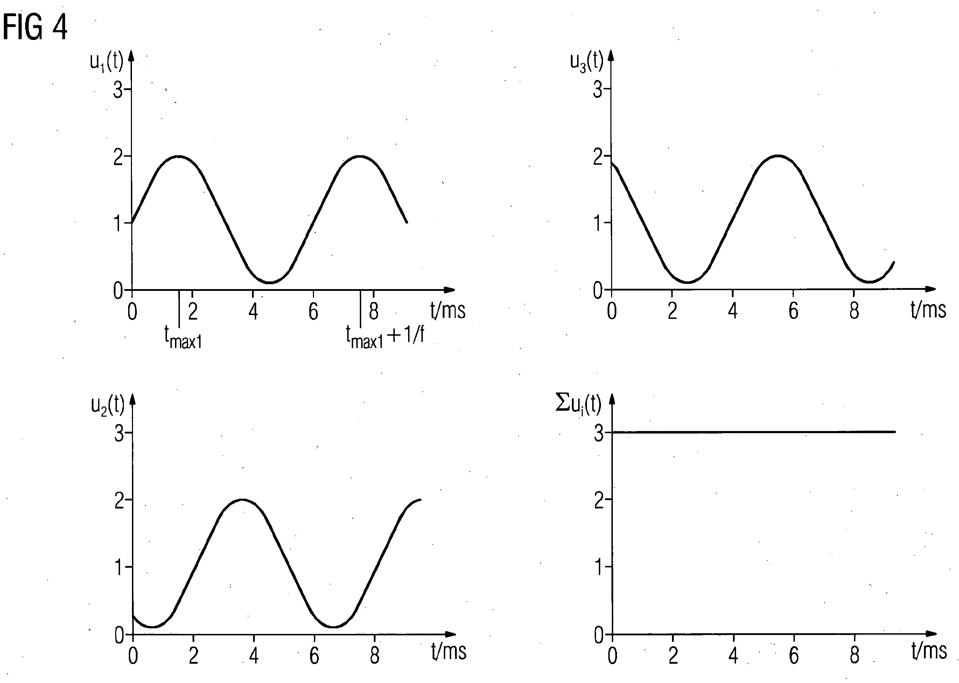

Die FIG 4 zeigt für die Ausführungsbeispiele der FIG 1 und 5 und für jede der drei Teilspannungen $u_1$, $u_2$, $u_3$ mögliche Spannungsverläufe über der Zeit t. Jede Phase hat einen Gleichanteil von 1 und einen Wechselanteil mit einer Amplitude von 1. Bei den Teilspannungen $u_1$, $u_2$, $u_3$ und dem Gleichanteil handelt es sich um bezogene Größen, die auf einen Skalierungsfaktor von beispielsweise 1 MV bezogen sind. In dem gezeigten Beispiel beträgt die Periode ungefähr 6 ms und die Frequenz f ungefähr 167 Hz. Je höher die Frequenz f ist, desto raumsparender können die Transformatoren ausgeführt werden. Bei einem direkten Anschluss an ein Drehstromnetz ist der Stromrichter mit der Frequenz dieses Netzes zu betreiben.

Im Maximum $u_1(t_{max1})$ einer ersten Phase $u_1(t)$ beträgt der Wechselanteil also 1, während der Wechselanteil der um plus minus 120° verschobenen anderen beiden Phasen $u_2$, $u_3$ zu diesem Zeitpunkt -0,5 beträgt. Daraus folgt zu diesem Zeitpunkt $t_{max1}$ eine Summe $\sum u_i(t_{max1})$ der Teilspannungen $u_1(t_{max1})$ + $u_2(t_{max1})$ + $u_3(t_{max1})$ inklusive Gleichspannungsanteilen von $\sum u_i(t_{max1})$ = 1+1 + 1-0,5 + 1-0,5 = 3 beträgt.

Wie im Folgenden bewiesen wird, gilt dies auch für jeden anderen Zeitpunkt t. Für ein dreiphasiges Drehstromsystem und $\omega t = 2\pi f$ gilt:

$$\sum u_i(t) = 3 + u_1(t) + u_2(t) + u_3(t)$$
$$= 3 + \cos(\omega t) + \cos(\omega t - 2\pi/3) + \cos(\omega t + 2\pi/3).$$

Mit

$$\cos(\omega t + 2\pi/3) = \cos \omega t \cos 2\pi/3 - \sin \omega t \sin 2\pi/3$$

und

$$\cos(\omega t - 2\pi/3) = \cos \omega t \cos 2\pi/3 + \sin \omega t \sin 2\pi/3$$

folgt:

$$\cos(\omega t - 2\pi/3) + \cos(\omega t + 2\pi/3) = 2 \cos \omega t \cos 2\pi/3.$$

Mit

$$\cos 2\pi/3 = -1/2$$

folgt daraus

$$\cos(\omega t - 2\pi/3) + \cos(\omega t + 2\pi/3) = -2/2 \cos \omega t = -\cos \omega t.$$

Damit beträgt

$$\Sigma u_i(t) = 3 + u_1(t) + u_2(t) + u_3(t) =$$
$$3 + \cos(\omega t) + \cos(\omega t - 2\pi/3) + \cos(\omega t + 2\pi/3) = 3.$$

Bei einem um 120° versetzten Verlauf der sinusförmigen Wechselanteile der drei Teilspannungen $u_1(t)$, $u_2(t)$, $u_3(t)$ heben sich also die Wechselanteile genau auf. Dies gilt generell für Systeme mit n Phasen, deren Phasenunterschiede zwischen benachbarten Phasen 2n/n beträgt. Im Wechselrichterbetrieb kann eine Gleichspannung $U_{DC}$ restfrei in n sinusförmige Teilspannungen mit äquidistantem Phasenunterschied 2n/n aufgeteilt werden.

Entsprechendes gilt auch bei umgekehrter Leistungsübertragungsrichtung, also im Gleichrichterbetrieb. Bei einer n-phasigen Speisung aus einem Mehrphasentransformator 20 mit sinusförmigen Teilspannungen $U_{21}$, die einen äquidistanten Phasenunterschied $2\pi/n$ aufweisen, liegt an der Reihenschaltung 43 der MMC-Module 30 zu jedem Zeitpunkt eine Gesamtspannung $\sum u_i(t) = n$ an, die sich aus einer Summe der Gleichanteile der n Teilspannungen zusammensetzt.

Wenn eine Kapazität des Auskoppelkondensators 16 groß genug gewählt wird, kann erreicht werden, dass bei Nennlast des Transformators 20 ein Quotient aus einem Effektivwert eines Spannungsabfalls $U_{21}$ an einer der Serienschaltungen 17 und eines Effektivwerts eines Spannungsabfalls $U_{16}$ an dem Auskoppelkondensator 16 der Serienschaltung 17 größer als 6 oder 10, ganz besonders bevorzugt größer als 20, ist.

Alternativ oder zusätzlich kann der Spannungsabfall $U_{16}$ für den Wechselrichterbetrieb in seiner Auswirkung auf eine Höhe der Ausgangsspannung $U_{22}$ mittels einer Verringerung der Windungszahl der Primärwicklung 21 und/oder einer Erhöhung der Windungszahl der Sekundärwicklung 22 ausgeglichen werden. Um ein Ansteigen der Ausgangsspannung $U_{22}$ infolge eines geringeren Spannungsabfalls $U_{16}$ bei Teillast- und/oder Leerlaufbetrieb zu vermeiden, kann bei Teillast- beziehungsweise Leerlaufbetrieb die Amplitude der Wechselanteile der Teilspannungen $u_1(t)$, $u_2(t)$, $u_3(t)$ mittels der Steuerung 14 so angepasst werden, dass die (durch den Stromrichter erzeugte) Ausgangsspannung $U_{22}$ weitgehend lastunabhängig ist. Mittels jeder der beiden vorgenannten Maßnahmen können für den Wechselrichterbetrieb Kosten und Bauraumbedarf für den Auskoppelkondensator 16 verringert werden.

Für einen Gleichrichterbetrieb kann der Spannungsabfall $U_{16}$ in seiner Auswirkung auf eine Höhe der Ausgangsspannung $U_{DC}$ alternativ oder zusätzlich mittels einer Erhöhung der Windungszahl der Primärwicklung 21 und/oder einer Verringerung der Windungszahl der Sekundärwicklung 22 ausgeglichen werden. Um ein Ansteigen der (durch die Stromrichterschaltung 12 erzeugten) Ausgangsspannung $U_{DC}$ infolge eines geringeren Spannungsabfalls $U_{16}$ bei Teillast- und/oder Leerlaufbetrieb zu vermeiden, kann bei Teillast- beziehungsweise Leerlaufbetrieb die Amplitude der Wechselanteile der Teilspannungen $u_1(t)$, $u_2(t)$, $u_3(t)$ mittels der Steuerung 14 so angepasst werden, dass die (durch die Stromrichterschaltung 12) erzeugte Ausgangsspannung $U_{DC}$ weitgehend lastunabhängig ist. Durch jede der beiden vorgenannten Maßnahmen können für den Gleichrichterbetrieb Kosten und Bauraumbedarf für den Auskoppelkondensator 16 verringert werden.

Die FIG 5 zeigt eine Ausführungsform eines erfindungsgemäßen Stromrichter 10. Ein Unterschied zur ersten Ausführungsform besteht darin, dass jeweils zwei Zuleitungen a", b' (bzw. a'", b") zu schaltungstechnisch benachbarten Serienschaltungen 17 zu einer gemeinsamen Zuleitung zusammengefasst sind. Hierdurch können sich Ströme durch schaltungstechnisch benachbarte Serienschaltungen 17 auf ihrer gemeinsamen Zuleitung zeitweise zumindest teilweise kompensieren. Hierdurch werden Streufelder und ohmsche Verluste verringert. Für die gemeinsamen Zuleitungen kann ein kleinerer Gesamtquerschnitt gewählt werden.

Außerdem wird im zweiten Ausführungsbeispiel die Sekundärseite 22s des Transformators 20 in Dreieckschaltung betrieben. Das zweite Ausführungsbeispiel ist in der Weise abwandelbar, dass die Sekundärseite 22s des Transformators 20 in Sternschaltung betrieben wird.

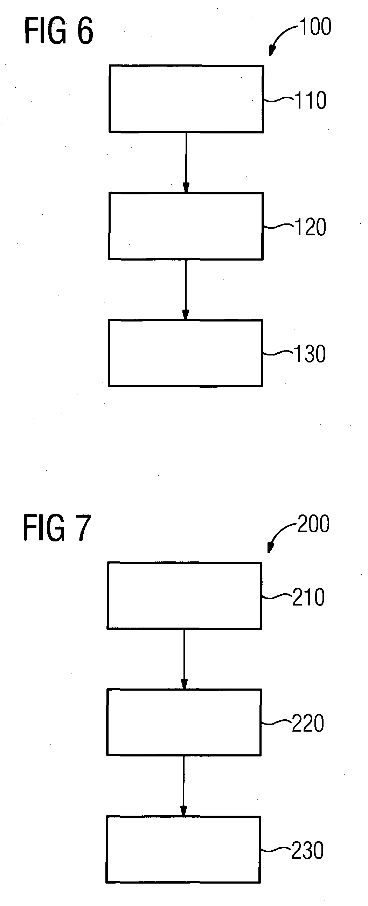

Die FIG 6 zeigt ein Ablaufdiagramm des erfindungsgemäßen Betriebsverfahrens 100 zum Wandeln einer Gleichspannung $U_{DC}$ in eine mindestens dreiphasige Wechselspannung $U_{22}$, $U_{22}'$, $U_{22}''$. Hierbei wird in einem ersten Schritt 110 eine Gleichspannung $U_{DC}$ an eine Reihenschaltung 12 von MMC-Modulen 30 angelegt. In einem zweiten Schritt 120 werden MMC-Module 30 zum Erzeugen und Bereitstellen mehrerer phasenversetzter Spannungen $u_1(t)$, $u_2(t)$, $u_3(t)$ an Anschlüssen a, b der MMC-Module 30 phasenversetzt angesteuert. In einem dritten Schritt 130 werden phasenversetzte Spannungen $U_{21}$ an Wicklungen 21 einer ersten Seite 21s eines mehrphasigen Transformators 20 mittels Auskoppelkondensatoren 16 angelegt.

Die FIG 7 zeigt ein Ablaufdiagramm des erfindungsgemäßen Betriebsverfahrens 200 zum Wandeln einer mindestens dreiphasigen Wechselspannung $U_{22}$, $U_{22}'$, $U_{22}''$ in eine Gleichspannung $U_{DC}$. Hierbei wird in einem ersten Schritt 210 eine mindestens dreiphasige Wechselspannung $U_{22}$, $U_{22}'$, $U_{22}''$ an eine zweite Seite 22s eines Transformators 20 angelegt. In einem zweiten Schritt 220 werden mindestens dreiphasige Spannungen $U_{21}$, $U_{21}'$, $U_{21}''$ an Wicklungen 21 einer ersten Seite 21s des mehrphasigen Transformators 20 mittels Auskoppelkondensatoren 16 ausgekoppelt. In einem dritten Schritt 230 werden in Reihe geschaltete MMC-Module 30 zum Erzeugen und Bereitstellen mehrerer phasenversetzter Spannungen $u_1(t)$, $u_2(t)$, $u_3(t)$ an Anschlüssen a, b der MMC-Module 30 phasenversetzt angesteuert.

Sowohl in dem Betriebsverfahren der FIG 6 wie auch in dem Betriebsverfahren der FIG 7 umfasst jedes der Submodule 40 eine Submodul-Halbbrücke 43 und eine Submodulkapazität 44, die der Submodul-Halbbrücke 43 parallelgeschaltet ist, wobei jeder Submodülzweig 41z, 42z jeder Submodul-Halbbrücke 43 einen Halbleiterschalter 41, 42 aufweist.

**Patentansprüche**

1. Stromrichter (10), wobei der Stromrichter (10) einen n-phasigen Transformator (20) und eine Stromrichterschaltung (12) mit n MMC-Modulen (30) umfasst und die Anzahl n mindestens drei beträgt, wobei jedes MMC-Modul (30) mindestens zwei in Reihe geschaltete Submodule (40) umfasst, wobei jedes Submodul (40) eine Submodul-Halbbrücke (43) und eine Submodulkapazität (44) umfasst, die der Submodul-Halbbrücke (43) parallelgeschaltet ist, wobei jeder Submodulzweig (41z, 42z) jeder Submodul-Halbbrücke (43) je einen Halbleiterschalter (41, 42) umfasst, wobei die MMC-Module (30) in Reihe geschaltet sind und jeweils ein elektrischer Abgriff (18) zwischen direkt miteinander elektrisch verbundenen MMC-Modulen (30) vorgesehen ist,

   wobei der Stromrichter (10) Auskoppelkondensatoren (16) zum Zuführen von elektrischer Energie zu dem Transformator (20) und/oder zum Entnehmen von elektrischer Energie aus dem Transformator (20) umfasst, wobei je eine Wicklung (21) einer ersten Seite (21s) des Transformators (20) mit je einem der Auskoppelkondensatoren (16) eine Serienschaltung (17) bildet, wobei jede der Serienschaltungen (17) zu je einem der MMC-Module (30) parallelgeschaltet ist,

   **dadurch gekennzeichnet, dass** zu zwei Serienschaltungen (17), die mit einem selben Abgriff (18) elektrisch verbunden sind, nur eine gemeinsame elektrische Zuleitung zu dem Abgriff (18) vorgesehen ist.

2. Stromrichter (10) nach Anspruch 1, **dadurch gekennzeichnet, dass** der Stromrichter (10) eine MMC-Steuerung (14) zur Steuerung der Halbleiterschalter (21, 22) umfasst, um mittels der Stromrichterschaltung (30) für die Serienschaltungen (17) mehrere zueinander phasenversetzte Spannungen ($u_1$, $u_2$, $u_3$) bereitzustellen.

3. Betriebsverfahren (100) zum Wandeln einer Gleichspannung ($U_{DC}$) in eine mindestens dreiphasige Wechselspannung ($U_{22}$, $U_{22}'$, $U_{22}''$),
   wobei das Betriebsverfahren (100) folgende Schritte (110, 120, 130) umfasst:

   - Anlegen (110) der Gleichspannung ($U_{DC}$) an eine Reihenschaltung von MMC-Modulen (30), wobei jedes der MMC-Module (30) mindestens zwei in Reihe geschaltete Submodule (40) umfasst, wobei jedes Submodul (40) eine Submodul-Halbbrücke (43) und eine Submodulkapazität (44) umfasst, die der Submodul-Halbbrücke (43) parallelgeschaltet ist, wobei jeder Submodulzweig (41z, 42z) jeder Submodul-Halbbrücke (43) je einen Halbleiterschalter (41, 42) umfasst;
   - phasenversetztes Ansteuern (120) der MMC-Module (30) zum Erzeugen und Bereitstellen mehrerer phasenversetzter Spannungen ($u_1$, $u_2$, $u_3$) an Anschlüssen (a, b) der MMC-Module (30); und
   - Anlegen (130) der phasenversetzten Spannungen ($u_1$, $u_2$, $u_3$) an Wicklungen (21) einer ersten Seite (21s) eines mehrphasigen Transformators (20) mittels Auskoppelkondensatoren (16), wobei je eine Wicklung (21) einer ersten Seite (21s) des Transformators (20) mit je einem der Auskoppelkondensatoren (16) eine Serienschaltung (17) bildet, wobei jede der Serienschaltungen (17) zu je einem der MMC-Module (30) parallelgeschaltet ist, wobei zu zwei Serienschaltungen (17), die mit einem selben Abgriff (18) elektrisch verbunden sind, nur eine gemeinsame elektrische Zuleitung zu dem Abgriff (18) vorgesehen ist.

4. Betriebsverfahren (200) zum Wandeln einer mindestens dreiphasigen Wechselspannung ($U_{22}$, $U_{22}'$, $U_{22}''$) in eine Gleichspannung ($U_{DC}$),
   wobei das Betriebsverfahren (200) folgende Schritte (210, 220, 230) umfasst:

   - Anlegen (210) der mindestens dreiphasigen Wechselspannung ($U_{21}$, $U_{22}'$, $U_{22}''$) an eine zweite Seite (22s) eines Transformators (20);
   - Auskoppeln (220) mindestens dreiphasiger Spannungen ($u_1$, $u_2$, $u_3$) an Wicklungen (21) einer ersten Seite (21s) des mehrphasigen Transformators (20) mittels Auskoppelkondensatoren (16), wobei je eine Wicklung (21) einer ersten Seite (21s) des Transformators (20) mit je einem der Auskoppelkondensatoren (16) eine Serienschaltung (17) bildet, wobei jede der Serienschaltungen (17) zu je einem der MMC-Module (30) parallelgeschaltet ist, wobei zu zwei Serienschaltungen (17), die mit einem selben Abgriff (18) elektrisch verbunden sind, nur eine gemeinsame elektrische Zuleitung zu dem Abgriff (18) vorgesehen ist;
   - phasenversetztes Ansteuern (230) von in Reihe geschalteten MMC-Modulen (30) zum Erzeugen und Bereitstellen mehrerer phasenversetzter Spannungen ($u_1$, $u_2$, $u_3$) an Anschlüssen (a, b) der MMC-Module (10), wobei jedes der MMC-Module (30) mindestens zwei in Reihe geschaltete Submodule (40) umfasst, wobei jedes Submodul (40) eine Submodul-Halbbrücke (43) und eine Submodulkapazität (44) umfasst, die der Submodul-Halbbrücke (43) parallelgeschaltet ist, wobei jeder Submodulzweig (41z, 42z) jeder Submodul-Halbbrücke (43) je einen Halbleiterschalter (21, 22) umfasst.

**5.** Betriebsverfahren (100, 200) nach Anspruch 3 oder 4, **dadurch gekennzeichnet, dass** ein Quotient aus einem Effektivwert eines Spannungsabfalls ($U_{21}$) an einer der Serienschaltungen (17) und eines Effektivwerts eines Spannungsabfalls ($U_{16}$) an dem Auskoppelkondensator (16) der Serienschaltung (17) größer als 6 oder 10, ganz besonders bevorzugt größer als 20, ist.

**6.** Betriebsverfahren (100, 200) nach einem der Ansprüche 3 bis 5, **dadurch gekennzeichnet, dass** eine Summe ($\sum u_i$) der Spannungsabfälle ($U_{ab}$) an den MMC-Modulen (30) konstant ist.

**7.** Betriebsverfahren (100, 200) nach einem der Ansprüche 3 bis 6, **dadurch gekennzeichnet, dass** ein Strom ($I_{12}$) durch die Reihenschaltung (12) der MMC-Module (30) konstant ist.

**8.** Betriebsverfahren (100, 200) nach einem der Ansprüche 3 bis 7, **dadurch gekennzeichnet, dass** eine Summe ($\sum u_i$) der Spannungsabfälle ($U_{ab}$) an den MMC-Modulen (30) lastunabhängig ist.

**Claims**

**1.** Power converter (10), wherein the power converter (10) comprises an n-phase transformer (20) and a power converter circuit (12) comprising n MMC modules (30), and the number n is at least three, wherein each MMC module (30) comprises at least two submodules (40) connected in series, wherein each submodule (40) comprises a submodule half-bridge (43) and a submodule capacitance (44), which is connected in parallel with the submodule half-bridge (43), wherein each submodule branch (41z, 42z) of each submodule half-bridge (43) comprises in each case one semiconductor switch (41, 42), wherein the MMC modules (30) are connected in series, and in each case an electrical tap (18) is provided between MMC modules (30) which are electrically connected directly to one another, wherein the power converter (10) comprises coupling-out capacitors (16) for feeding electrical energy to the transformer (20) and/or for drawing electrical energy from the transformer (20), wherein in each case one winding (21) on a first side (21s) of the transformer (20) forms a series circuit (17) with in each case one of the coupling-out capacitors (16), wherein each of the series circuits (17) is connected in parallel with in each case one of the MMC modules (30), **characterized in that** only one common electrical feedline to the tap (18) is provided for two series circuits (17), which are electrically connected to the same tap (18).

**2.** Power converter (10) according to Claim 1, **characterized in that** the power converter (10) comprises an MMC control system (14) for controlling the semiconductor switches (21, 22) in order to provide a plurality of voltages ($u_1$, $u_2$, $u_3$), which are phase-shifted with respect to one another, for the series circuits (17) by means of the power converter circuit (30).

**3.** Operating method (100) for converting a DC voltage ($U_{DC}$) into an at least three-phase AC voltage ($U_{22}$, $U_{22}'$, $U_{22}''$), wherein the operating method (100) comprises the following steps (110, 120, 130):

- applying (110) the DC voltage ($U_{DC}$) to a series circuit of MMC modules (30), wherein each of the MMC modules (30) comprises at least two submodules (40) connected in series, wherein each submodule (40) comprises a submodule half-bridge (43) and a submodule capacitance (44), which is connected in parallel with the submodule half-bridge (43), wherein each submodule branch (41z, 42z) of each submodule half-bridge (43) comprises in each case one semiconductor switch (41, 42);
- actuating (120), with a phase shift, the MMC modules (30) for generating and providing a plurality of phase-shifted voltages ($u_1$, $u_2$, $u_3$) at connections (a, b) of the MMC modules (30); and
- applying (130) the phase-shifted voltages ($u_1$, $u_2$, $u_3$) to windings (21) on a first side (21s) of a polyphase transformer (20) by means of coupling-out capacitors (16), wherein in each case one winding (21) on a first side (21s) of the transformer (20) forms a series circuit (17) with in each case one of the coupling-out capacitors (16), wherein each of the series circuits (17) is connected in parallel with in each case one of the MMC modules (30), wherein only one common electrical feedline to the tap (18) is provided for two series circuits (17), which are electrically connected to the same tap (18).

4. Operating method (200) for converting an at least three-phase AC voltage ($U_{22}$, $U_{22}'$, $U_{22}''$) into a DC voltage ($U_{DC}$), wherein the operating method (200) comprises the following steps (210, 220, 230):

- applying (210) the at least three-phase AC voltage ($U_{22}$, $U_{22}'$, $U_{22}''$) to a second side (22s) of a transformer (20);
- coupling out (220) at least three-phase voltages ($u_1$, $u_2$, $u_3$) to windings (21) on a first side (21s) of the polyphase transformer (20) by means of coupling-out capacitors (16), wherein in each case one winding (21) on a first side (21s) of the transformer (20) forms a series circuit (17) with in each case one of the coupling-out capacitors (16), wherein each of the series circuits (17) is connected in parallel with in each case one of the MMC modules (30), wherein only one common electrical feedline to the tap (18) is provided for two series circuits (17), which are electrically connected to the same tap (18).
- actuating (230), with a phase shift, series-connected MMC modules (30) for generating and providing a plurality of phase-shifted voltages ($u_1$, $u_2$, $u_3$) to connections (a, b) of the MMC modules (10), wherein each of the MMC modules (30) comprises at least two submodules (40) connected in series, wherein each submodule (40) comprises a submodule half-bridge (43) and a submodule capacitance (44), which is connected in parallel with the submodule half-bridge (43), wherein each submodule branch (41z, 42z) of each submodule half-bridge (43) comprises in each case one semiconductor switch (41, 42).

5. Operating method (100, 200) according to Claim 3 or 4, **characterized in that** a quotient of an rms value of a voltage drop ($U_{21}$) across one of the series circuits (17) and an rms value of a voltage drop ($U_{16}$) across the coupling-out capacitor (16) of the series circuit (17) is greater than 6 or 10, very particularly preferably greater than 20.

6. Operating method (100, 200) according to one of Claims 3 to 5, **characterized in that** a sum ($\sum u_i$) of the voltage drops ($U_{ab}$) across the MMC modules (30) is constant.

7. Operating method (100, 200) according to one of Claims 3 to 6, **characterized in that** a current ($I_{12}$) through the series circuit (12) of MMC modules (30) is constant.

8. Operating method (100, 200) according to one of Claims 3 to 7, **characterized in that** a sum ($\sum u_i$) of the voltage drops ($U_{ab}$) across the MMC modules (30) is load-independent.

**Revendications**

1. Convertisseur (10), le convertisseur (10) comprenant un transformateur (20) à n-phases et un circuit (12) de convertisseur ayant n modules MMC (30) et le nombre n étant d'au moins trois, chaque module MMC (30) comprenant au moins deux sous-modules (40) montés en série, chaque sous-module (40) comprenant un demi-pont (43) de sous-module et une capacité (44) de sous-module, qui est montée en parallèle au demi-pont (43) de sous-module, chaque branche (41z, 42z) de sous-module de chaque demi-pont (43) de sous-module comprenant respectivement un commutateur (41, 42) à semi-conducteur, les modules MMC (30) étant montés en série et respectivement une prise (18) électrique étant prévue entre des modules MMC (30) reliés électriquement entre eux directement, dans lequel le convertisseur (10) comprend des condensateurs (16) de découplage pour apporter de l'énergie électrique au transformateur (20) et/ou pour retirer de l'énergie électrique du transformateur (20), un enroulement (21) d'un premier côté (21s) du transformateur (20) formant un circuit (17) série avec respectivement l'un des condensateurs (16) de découplage, chacun des circuits (17) série étant montés en parallèle à respectivement l'un des modules MMC (30), **caractérisé en ce que**, pour deux circuits (17) série qui sont reliés électriquement à une même prise (18), il n'est prévu qu'une ligne (18) électrique commune menant à la prise (18).

2. Convertisseur (10), suivant la revendication 1, **caractérisé en ce que** le convertisseur (10) comprend une commande MMC (14) pour commander le commutateur (21, 22) à semi-conducteur afin de mettre à disposition, au moyen du circuit (30) de convertisseur pour les circuits (17) série, plusieurs tensions ($u_1$, $u_2$, $u_3$) déphasées les unes par rapport aux autres.

3. Procédé (100) pour transformer une tension ($U_{DC}$) continue en une tension ($U_{22}$, $U_{22}'$, $U_{22}''$) alternative au moins triphasée, dans lequel le procédé (100) comprend les stades (110, 120, 130) suivants :

- application (110) de la tension ($U_{DC}$) continue à un circuit série de modules MMC (30), chacun des modules MMC (30) comprenant au moins deux sous-modules (40) montés en série, chaque sous-module (40) comprenant un demi-pont (43) de sous-module et une capacité (44) de sous-module, qui est montée en parallèle au demi-pont (43) de sous-module, chaque branche (41z, 42z) de sous-module de chaque demi-pont (43) de sous-module comprenant respectivement un commutateur (41, 42) à semi-conducteur ;

- commande (120) déphasée des modules MMC (30) pour produire et mettre à disposition plusieurs tensions ($u_1$, $u_2$, $u_3$) déphasées à des bornes (a, b) des modules MMC (30) et

- application (130) des tensions ($u_1$, $u_2$, $u_3$) déphasées à des enroulements (21) d'un premier côté (21s) d'un transformateur (20) polyphasé au moyen de condensateurs (16) de découplage, chaque enroulement (21) d'un premier côté (21s) du transformateur (20) formant un circuit (17) série avec respectivement l'un des condensateurs (16) de découplage, chacun des circuits (17) série étant monté en parallèle à respectivement l'un des modules MMC (30), dans lequel, pour deux circuits (17) série qui sont reliés électriquement à une même prise (18), il n'est prévu qu'une ligne électrique commune allant à la prise (18).

4. Procédé (200) de transformation d'une tension ($U_{22}$, $U_{22'}$, $U_{22''}$) alternative au moins triphasée en une tension ($U_{DC}$) continue,

dans lequel le procédé (200) a les stades (210, 220, 230) suivants :

- application (210) de la tension ($U_{21}$, $U_{22'}$, $U_{22''}$) alternative au moins triphasée à un deuxième côté (22s) d'un transformateur (20),

- découplage (220) de tensions ($u_1$, $u_2$, $u_3$) au moins triphasées à des enroulements (21) d'un premier côté (21s) du transformateur (20) polyphasé au moyen de condensateurs (16) de découplage, chaque enroulement (21) d'un premier côté (21s) du transformateur (20) formant un circuit (17) série avec respectivement l'un des condensateurs (16) de découplage, chacun des circuits (17) série étant monté en parallèle à respectivement l'un des modules MMC (30), dans lequel, pour deux circuits (17) série qui sont reliés électriquement à une même prise (18), il n'est prévu qu'une ligne électrique commune menant à la prise (18),

- commande (230) déphasée de modules MMC (30) montés en série pour produire et mettre à disposition plusieurs tensions ($u_1$, $u_2$, $u_3$) déphasées à des bornes (a, b) des modules MMC (30), chacun des modules MMC (30) comprenant au moins deux sous-modules (40) montés en série, chaque sous-module (40) comprenant un demi-pont (43) de sous-module et une capacité (44) de sous-module, qui est montée en parallèle au demi-pont (43) de sous-module, chaque branche (41z, 42z) de sous-module de chaque demi-pont (43) de sous-module comprenant respectivement un commutateur (21) à semi-conducteur.

5. Procédé (100, 200), suivant la revendication 3 ou 4, **caractérisé en ce qu'**un quotient d'une valeur efficace d'une chute ($U_{21}$) de tension aux bornes de l'un des circuits (17) série et d'une valeur efficace d'une chute ($U_{16}$) de tension aux bornes du condensateur (16) de découplage du circuit (17) série est plus grand que 6 ou 10, d'une manière particulièrement préférée plus grand que 20.

6. Procédé (100, 200), suivant l'une des revendications 1 à 5, **caractérisé en ce qu'**une somme ($\sum u_1$) des chutes ($U_{ab}$) de tension aux bornes des modules MMC (30) est constante.

7. Procédé (100, 200), suivant l'une des revendications 3 à 6, **caractérisé en ce qu'**un courant ($I_{12}$) passant dans le circuit (12) série des modules MMC (30) est constant.

8. Procédé (100, 200), suivant l'une des revendications 3 à 7, **caractérisé en ce qu'**une somme ($\sum u_i$) des chutes ($U_{ab}$) de tension aux bornes des modules MMC (30) dépend de la charge.

FIG 1

EP 2 845 303 B1

**FIG 2**

**FIG 3**

FIG 5

FIG 4

FIG 6

```
                                    ⌐100
        ┌──────────────────┐
        │                  │──110
        │                  │
        └────────┬─────────┘
                 │
                 ▼
        ┌──────────────────┐
        │                  │──120
        │                  │
        └────────┬─────────┘
                 │
                 ▼
        ┌──────────────────┐
        │                  │──130
        │                  │
        └──────────────────┘
```

FIG 7

```
                                    ⌐200
        ┌──────────────────┐
        │                  │──210
        │                  │
        └────────┬─────────┘
                 │
                 ▼
        ┌──────────────────┐
        │                  │──220
        │                  │
        └────────┬─────────┘
                 │
                 ▼
        ┌──────────────────┐
        │                  │──230
        │                  │
        └──────────────────┘
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011141059 A1
- WO 2011141059 A